(19) Europäisches Patentamt

European Patent Office

Office européen des brevets

(11) **EP 1 596 018 A2**

(12) **EUROPÄISCHE PATENTANMELDUNG**

(43) Veröffentlichungstag:
   **16.11.2005 Patentblatt 2005/46**

(51) Int Cl.⁷: **E04B 2/02**

(21) Anmeldenummer: **05010188.0**

(22) Anmeldetag: **11.05.2005**

(84) Benannte Vertragsstaaten:
   **AT BE BG CH CY CZ DE DK EE ES FI FR GB GR HU IE IS IT LI LT LU MC NL PL PT RO SE SI SK TR**
   Benannte Erstreckungsstaaten:
   **AL BA HR LV MK YU**

(30) Priorität: **11.05.2004 DE 102004023741**

(71) Anmelder: **Ullermann, Klaus**
   **91126 Schwabach (DE)**

(72) Erfinder: **Ullermann, Klaus Dipl.Ing**
   **91126 Schwaboch (DE)**

(74) Vertreter: **Küchler, Stefan**
   **Patentanwalt**
   **Färberstrasse 20**
   **90402 Nürnberg (DE)**

(54) **Mauerstein sowie Masse und Verfahren zum Herstellen desselben**

(57)   Die Erfindung richtet sich auf eine Masse zum Herstellen eines Mauersteins mit folgenden Bestandteilen (jeweils in Vol.-%):

| | | |
|---|---|---|
| 5-75% | Leichtzuschlag-, Schäumungs- und/oder Ausbrennstoff(e) | (Bestandteil x) |
| 2-30% | Schwerzuschlagstoff(e) | (Bestandteil y) |
| Rest | Bindemittel, ggf. Füllstoffe und Wasser | (Bestandteil z), |

wobei das Verhältnis von x/y so eingestellt ist, dass die Reinrohdichte größer ist als 1,4 g/cm³, vorzugsweise größer als 1,45 g/cm³, insbesondere größer als 1,5 g/cm³; ferner auf einen aus dieser Masse hergestellten Mauerstein und auf ein Verfahren zur Herstellung eines solchen Mauersteins, wobei die Formung und/oder das Verfestigen des Mauersteins unter Verwendung eines Fördermittels erfolgt.

**EP 1 596 018 A2**

**Beschreibung**

Die Erfindung richtet sich auf einen Mauerstein, insbesondere für Außenwände, sowie auf eine Masse und ein Verfahren zum Herstellen desselben, insbesondere durch Brennen oder durch hydraulisches Abbinden, bspw. in einem Autoklaven.

Moderne Baustoffe müssen immer strengeren Anforderungen genügen. Dies gilt auch für Mauersteine, insbesondere solche für Außenwände. Dort ist ein guter Wärmedämmwert von primärer Bedeutung. Daneben ist ein gutes Wärmespeichervermögen wünschenswert, und in zunehmendem Maße auch eine möglichst gute Schalldämmung. Es hat sich jedoch erwiesen, dass ein guter Wärmedämmwert zumeist mit einem schlechten Schalldämmwert verbunden ist. Dies beruht darauf, dass ein hoher Wärmedämmwert zumeist durch Hohlräume in einem Mauerstein, insbesondere durch Poren oder Kammern, erzielt wird. Diese meist luftgefüllten Hohlräume steigern zwar den Wärmedämmungswert, reduzieren aber gleichzeitig die Schalldämmung.

Aus diesen Nachteilen des beschriebenen Standes der Technik resultiert das die Erfindung initiierende Problem, einen Mauerstein bzw. eine Masse zur Herstellung desselben zu finden, welche den Anforderungen an hohe Schall- und Wärmedämmung gleichermaßen gerecht werden.

Die Lösung dieses Problems gelingt dadurch, dass die Masse zum Herstellen eines Mauersteins, insbesondere für Außenwände, folgende Bestandteile enthält:

| | |
|---|---|
| 5-75% Leichtzuschläg-, Schäumungs- und/oder Ausbrennstoff(e) | (Bestandteil x) |
| 2-30% Schwerzuschlagstoff(e) | (Bestandteil y) |
| Rest Bindemittel, ggf. Füllstoffe und Wasser | (Bestandteil z), |

wobei das Verhältnis von x/y so eingestellt ist, dass die Reinrohdichte größer ist als 1,4 g/cm$^3$, vorzugsweise größer als 1,45 g/cm$^3$, insbesondere größer als 1,5 g/cm$^3$.

Der erfindungsgemäße Mauerstein wird aus dieser Masse geformt und anschließend bspw. gebrannt oder hydraulisch abgebunden.

Weitere Vorteile sind den Unteransprüchen zu entnehmen.

Es hat sich gezeigt, dass die Verwendung von Schwerzuschlagstoffen einerseits die Schalldämmung erhöht, andererseits zwar die Wärmedämmung (zumeist) senkt, aber nicht in einem solchen Ausmaß, wie dieselbe durch den Zusatz von Leichtzuschlagstoffen angehoben wird. Somit kann durch die gleichzeitige Verwendung von Leicht- und Schwerzuschlagstoffen gegenüber der Verwendung eines reinen Tonmaterials sowohl eine Steigerung der Wärmedämmung als auch der Schalldämmung erreicht werden, was gerade für Anlieger von viel befahrenen Straßen nicht unwichtig ist.

Es hat sich gezeigt, daß infolge der Leichtzuschlagstoffe eine ausreichende Schalldämmung wenigstens eine Reinrohdichte von 1,4 g/cm$^3$ erfordert.

Besondere Vorteile bietet der Einsatz von mehr als 10 Vol.-% des Bestandteils x (Leichtzuschlagstoffe) und weniger als 60 Vol.-% desselben, vorzugsweise von weniger als 50 Vol.-%, insbesondere von weniger als 45 Vol.-%.

Günstig erwiesen hat sich ferner der Einsatz von 3 - 25 Vol.-% des Bestandteils y (Schwerzuschlagstoffe).

Durch eine Mindestmenge der Zuschlagstoffe (x + y) von 15 Vol.-% oder mehr: x + y ≥15 Vol.-%, wird erreicht, dass die Steigerung der Wärme- und Schalldämmung den Zusatz der Zuschlagstoffe wirtschaftlich rechtfertigt.

Andererseits sollte eine Höchstmenge der Zuschlagstoffe (x + y) von 80 Vol.-% oder weniger eingehalten werden: x + y ≤ 80 Vol.-%, insbesondere sogar von weniger als 60 Vol.-%: x + y ≤ 60 Vol.-%. Dadurch ist der Anteil des Bindemittels ausreichend, um eine ausreichende mechanische Stabilität zu gewährleisten.

Als Bestandteil x sind vorzugsweise Werkstoffe einzusetzen, die beim Erhitzen, insbesondere beim Brennen des Mauersteins, Gas oder Dampf freisetzen, so dass Poren entstehen, die mit Gas oder Dampf gefüllt sind. Auf diesem Weg können bspw. Porenbetonsteine hergestellt werden.

Ferner können als Bestandteil x Werkstoffe mit einer Schüttrohdichte von 1,0 kg/dm$^3$ oder weniger eingesetzt sein. Solche Leichtzuschlagstoffe können auch ohne chemische Veränderung die Wärmeleitfähigkeit senken, daraus lassen sich bspw. Leichtbetonsteine herstellen.

Besonders geeignete Leichtzuschlag-, Schäumungs- und/oder Ausbrennstoffe haben eine Wärmeleitfähigkeit von 0,3 W/(m*K) oder weniger, insbesondere von weniger als 0,15 W/(m*K).

Als Bestandteil x (Leichtzuschlag-, Schäumungs- und/oder Ausbrennstoffe) eignen sich anorganische Werkstoffe, vorzugsweise mit einem niedrigen spezifischen Gewicht wie bspw. Kalk, Vulkangesteine (bspw. Perlit), etc. Darüber hinaus lassen sich als Leichfizuschlagstoffe oder Ausbrennstoffe organische Werkstoffe verwenden wie Cellulose, Sägespäne, Papier, etc.

Als Schwerzuschlagstoffe dienen vor allem Werkstoffe, die eine Rohdichte von 3,0 kg/dm$^3$ oder mehr aufweisen, vorzugsweise von mehr als 3,3 kg/dm$^3$, insbesondere von mehr als 3,6 kg/dm$^3$. Diesen obliegt es, einem erfindungsgemäßen Mauerstein eine hohe Masse zu verleihen, so dass Schallschwingungen möglichst stark gedämpft werden.

Als Schwerzuschlagstoff sollte wenigstens ein anorganisches Material eingesetzt sein, vorzugsweise ein Mineral, insbesondere in Form eines Tiefengesteins und/oder Erzes, und/oder vorzugsweise wenigstens eine Verbindung eines Metalles, bspw. Eisen, oder eines Halbmetalls oder von Silizium oder von wenigstens einer Mischung dieser Elemente mit einem oder mehreren Nichtmetallen, beispielsweise mit Sauerstoff.

Besonders bevorzugt die Erfindung als Schwerzuschlagstoff wenigstens ein Oxid (bspw. Quarz, Quarzsand; Hämatit), ein Hydroxid (bspw. Goethit), Karbonat (bspw. Magnesit), Sulfat (bspw. Baryt), Wolframat (bspw. Scheelit), ferner Sulfid, Arsenid, Antimonid, Halogenid, Nitrat, Borat, Phosphat, Chromat, Molybdat, Arsenat, Vanadat und/oder Sifikat. Tiefengesteine haben zumeist einen höheren Schmelzpunkt als Eruptivgesteine, was vor allem beim Brennen vorteilhaft ist. Oftmals ist die spezifische Dichte von Tiefengesteinen auch größer als bei Eruptivgesteinen, was unabhängig von dem Verfestigungsmechanismus zu bevorzugen ist.

Besonders Schwerspat (Baryt $BaSO_4$), oder ein Zwischenprodukt der Schwerspatgewinnung oder -erzeugung als Schwerzuschlagstoff zeigt hohe Schalldämmungswerte.

Auch Schwerstein (Scheelit, Tungstein $CaWO_4$), oder ein Zwischenprodukt der Scheelitgewinnung oder -erzeugung hat sich als Schwerzuschlagstoff bewährt.

Auch Sande mit einem entsprechend hohen spezifischen Gewicht, insbesondere Granitsand, oder ein Zwischenprodukt von dessen Aufbereitung, lassen sich als Schwerzuschlagstoffe einsetzen.

Ferner sieht die Erfindung die Verwendung von Magnesiumerz vor, insbesondere von Magnesit (Bitterspat $MgCO_3$) oder einem Produkt der Magnesitgewinnung.

Geeignete Schwerzuschlagstoffe lassen sich auch unter den Eisenerzen finden, insbesondere in Form des Hämatit (Eisenglanz $Fe_2O_3$), Ilmenit ($FeTiO_3$; isomorph zu $(Mn; Mg, Fe)TiO_3$), Limonit (Brauneisenerz $FoO(OH)^{-}n\ H_2O$), Goethit (Eisenhydroxid $\alpha$-$FeO(OH)$) oder einem Zwischenprodukt der Gewinnung und/oder Erzeugung dieser Materialien. Ferner eignen sich Schwertmannit und/oder Jarosit und/oder ein Zwischenprodukt der Gewinnung und/oder Erzeugung dieser Materialien.

Neben reinen Naturprodukten können auch künstlich erzeugte Materialien ais Schwerzuschlagstoff Verwendung finden, bspw. Walzzunder aus der Metallverarbeitung und/oder -herstellung.

Als Bindemittel kommen alle mineralischen Bindemittel in Betracht, insbesondere keramische Bindemittel wie Ton, hydraulische Bindemittel wie Zement, Beton, Kalk, Gips, etc., oder silikatische Bindemittel wie bspw. Wasserglas. Entsprechend findet das Abbinden durch Brennen statt oder durch Trocknen, ggf. bei erhöhter Temperatur und/oder im Autoklaven.

Auch ggf. vorhandene Füllstoffe sollten vorwiegend mineralischer Natur sein, bspw. in Form von Sand. Dadurch ergibt sich eine Struktur des Mauersteins mit einheitlichem chemischem und physikalischem Verhalten.

Indem die Wärmeleitfähigkeit des erfindungsgemäßen Mauersteins gleich oder kleiner ist als 0,14 W/(m*K), ist eine für einen Außenwandstein ausreichende Wärmedämmung sichergestellt.

Das erfindungsgemäße Verfahren zeichnet sich dadurch aus, dass die Formung und/oder Verfestigung des Mauersteins (Abbinden und/oder Brennen) unter Verwendung eines Fördermittels (Fließband od. dgl.) erfolgt. Durch eine solche maschinelle bzw. automatische Fertigung lassen sich die Herstellungskosten minimieren, so dass evtl. anfallende, erhöhte Materialkosten zumindest teilweise kompensiert werden können. Die Abbinde- und daraus folgend die Verarbeitungstechnik richtet sich nach dem verwendeten Bindemittel (Ton, Zement od. dgl) sowie ggf. nach der Art der Leichtzuschlagstoffe bzw. Schäumungs- und/oder Ausbrennstoffe; die Schwerzuschlagstoffe haben darauf meist nur einen geringen oder gar keinen Einfluß; jedoch sollte während der Verarbeitung die Temperatur nicht über den Schmelzpunkt der Schwerzuschlagstoffe steigen, da dieselben in festem Aggregatszustand in dem Bindemittel weitgehend immobilisiert sind, während sie in verflüssigtem Zustand zu einer unerwünschten Erweichung eines Rohlings beitragen können.

Schließlich entspricht es der Lehre der Erfindung, dass das Verfestigen des Mauersteins entweder ohne Erhitzung stattfindet oder mittels eines befeuerten Ofens beheizt wird, insbesondere unter Verbrennung eines fossilen und/oder biogenen Energieträgers (Kohle, Erdgas) und/oder eines daraus gewonnenen Produkts (Heizöl) in dem Ofen. Indem solchenfalls ein primärer Energieträger verwendet wird und nicht ein elektrisch betriebener Ofen, der bspw. mit Hitzestrahlung arbeitet, ist der Wirkungsgrad verbessert, was sich sowohl förderlich für die Umwelt als auch kostensenkend auswirkt.

Weitere Merkmale, Einzelheiten, Vorteile und Wirkungen auf der Basis der Erfindung ergeben sich aus der folgenden Beschreibung einer bevorzugten Ausführungsform der Erfindung.

1. Probe 1:

Ausgangspunkt der Erfindung war eine reine Tonmischung, wie sie für die Herstellung von Ziegeln üblich ist (x = y = 0 Vol.-%; z = 100 Vol.-%). Daraus wurden Mauersteine geformt und bei etwa 950 °C gebrannt, und die physikalischen Eigenschaften wurden gemessen und sind in der folgenden Tabelle wiedergegeben.

2. Probe 2:

Anschließend wurde eine modifizierte Masse zubereitet, indem der Mischung für die Vergleichsprobe 1 Papierfangstoff als Leichtzuschlagstoff im Verhältnis 1 : 4 beigemengt wurde (x = 20 Vol.-%; y = 0 Vol.-%; z = 80 Vol.-%). Wieder wurden daraus Mauersteine geformt und gebrannt, und die physikalischen Eigenschaften wurden gemessen und sind in der folgenden Tabelle wiedergegeben.

3. Probe 3:

Daraufhin wurde der Mischung für die Vergleichsprobe 2 Baryt als Schwerzuschlagstoff im Verhältnis 1 : 10 beigemengt (x = 18 Vol.-%; y = 9 Vol.-%; z = 73 Vol.-%). Auch davon wurden Mauersteine geformt und gebrannt, und die physikalischen Eigenschaften wurden gemessen und sind in der folgenden Tabelle wiedergegeben.

Tabelle 1

|  | Probe 1 | Probe 2 | Probe 3 |
|---|---|---|---|
| Wärmeleitfähigkeit | 100 % | 78,4% | 81,08 % |
| Scherben-Rohdichte | 100 % | 88,1% | 107,5 % |
| Druckfestigkeit | 100 % | 49,5% | 41,0 % |
| Trocken-Schwindung [%] | 8,4 | 8,4 | 7,1 |
| Gesamt-Schwindung [%] | 8,7 | 8,4 | 7,2 |

Man erkennt daraus, dass die erfindungsgemäße Probe 3 sowohl eine größere Scherben-Rohdichte hat als die Probe 1 und damit eine bessere Schalldämmung als diese wie auch eine geringere Wärmeleitfähigkeit und damit eine verbesserte Wärmedämmung. Sie eignet sich daher in besonderem Maße als Außenwandstein für Gebäude an viel befahrenen Straßen, etc.

**Patentansprüche**

1. Masse zum Herstellen eines Mauersteins, insbesondere durch Brennen oder hydraulisches Abbinden, mit folgenden Bestandteilen (jeweils in Vol.-%):

| | |
|---|---|
| 5-75% Leichtzuschlag-, Schäumungs- und/oder Ausbrennstoff(e) | (Bestandt x) |
| 2-30% Schwerzuschlagstoff(e) | (Bestandteil y) |
| Rest Bindemittel, ggf. Füllstoffe und Wasser | (Bestandteil z), |

wobei das Verhältnis von x/y so eingestellt ist, dass die Reinrohdichte größer ist als 1,4 g/cm$^3$, vorzugsweise größer als 1,45 g/cm$^3$, insbesondere größer als 1,5 g/cm$^3$.

2. Mauerstein, insbesondere für Außenwände, hergestellt aus einer Masse mit folgenden Bestandteilen (jeweils in Vol.-%):

| | |
|---|---|
| 5-75% Leichtzuschlag-, Schäumungs- und/oder Ausbrennstoff(e) | (Bestandt x) |
| 2-30% Schwerzuschlagstoff(e) | (Bestandteil y) |
| Rest Bindemittel, ggf. Füllstoffe und Wasser | (Bestandteil z), |

wobei das Verhältnis von x/y so eingestellt ist, dass die Reinrohdichte größer ist als 1,4 g/cm$^3$, vorzugsweise größer als 1,45 g/cm$^3$, insbesondere größer als 1,5 g/cm$^3$.

3. Masse oder Mauerstein nach Anspruch 1 oder 2, **dadurch gekennzeichnet, dass** der Anteil des Bestandteils x (Leichtzuschlag-, Schäumungs- und/oder Ausbrennstoffe) mindestens 10 Vol-% beträgt.

**4.** Masse oder Mauerstein nach einem der Ansprüche 1 bis 3, **dadurch gekennzeichnet, dass** der Anteil des Bestandteils x (Leichtzuschlag-, Schäumungs- und/oder Ausbrennstoffe) maximal 60 Vol.-% beträgt, vorzugsweise 50 Vol.-% oder weniger, insbesondere 45 Vol.-% oder weniger.

**5.** Masse oder Mauerstein nach einem der Ansprüche 1 bis 3, **dadurch gekennzeichnet, dass** der Anteil des Bestandteils y (Schwerzuschlagstoffe) zwischen 3 und 25 Vol.-% liegt.

**6.** Masse oder Mauerstein nach einem der vorhergehenden Ansprüche, **gekennzeichnet durch** eine Mindestmenge der Zuschlagstoffe (x + y) von 15 Vol.-% oder mehr:

$$x + y \geq 15 \text{ Vol.-\%.}$$

**7.** Masse oder Mauerstein nach einem der vorhergehenden Ansprüche, **gekennzeichnet durch** eine Höchstmenge der Zuschlagstoffe (x + y) von 80 Vol.-% oder weniger:

$$x + y \leq 80 \text{ Vol.-\%.}$$

**8.** Masse oder Mauerstein nach einem der vorhergehenden Ansprüche, **dadurch gekennzeichnet, daß** als Leichtzuschlag-, Schäumungs- und/oder Ausbrennstoffe Werkstoffe eingesetzt sind, die beim Erhitzen, insbesondere beim Brennen des Mauersteins, Gas oder Dampf freisetzen, so dass Poren entstehen (bspw. Bildung sog. "Porenbetonsteine").

**9.** Masse oder Mauerstein nach einem der vorhergehenden Ansprüche, **dadurch gekennzeichnet, daß** als Leichtzuschlag-, Schäumungs- und/oder Ausbrennstoffe Werkstoffe mit einer Schüttrohdichte von 1,0 kg/dm$^3$ oder weniger, eingesetzt sind (bspw. Bildung sog. "Leichtbetonsteine").

**10.** Masse oder Mauerstein nach einem der vorhergehenden Ansprüche, **dadurch gekennzeichnet, daß** als Leichtzuschlag-, Schäumungs- und/oder Ausbrennstoffe Werkstoffe eingesetzt sind, deren (spezifische, d.h., auf das reine, porenfreie Material bezogene) Wärmeleitfähigkeit gleich oder kleiner ist als 0,3 W/(m*K), insbesondere gleich oder kleiner als 0,15 W/(m*K).

**11.** Masse oder Mauerstein nach einem der vorhergehenden Ansprüche, **dadurch gekennzeichnet, daß** als Schwerzuschlagstoffe Werkstoffe eingesetzt sind, die eine Rohdichte von 3,0 kg/dm$^3$ oder mehr aufweisen, vorzugsweise von mehr als 3,3 kg/dm$^3$, insbesondere von mehr als 3,6 kg/dm$^3$.

**12.** Masse oder Mauerstein nach einem der vorhergehenden Ansprüche, **dadurch gekennzeichnet, daß** als Schwerzuschlagstoff wenigstens ein anorganisches Material eingesetzt ist, vorzugsweise ein Mineral, insbesondere in Form eines Tiefengesteins und/oder Erzes, und/oder vorzugsweise wenigstens eine Verbindung eines Metalles, bspw. Eisen, oder eines Halbmetalls oder von Silizium oder von wenigstens einer Mischung dieser Elemente mit einem oder mehreren Nichtmetallen, beispielsweise mit Sauerstoff.

**13.** Verfahren zur Herstellung eines Mauersteins nach einem der Ansprüche 2 bis 12, **dadurch gekennzeichnet, dass** die Formung und/oder das Verfestigen des Mauersteins (Abbinden und/oder Brennen) unter Verwendung eines Fördermittels (Fließband od. dgl.) erfolgt.

**14.** Verfahren nach Anspruch 13, **dadurch gekennzeichnet, dass** das Verfestigen des Mauersteins ohne Erhitzung stattfindet oder mittels eines befeuerten Ofens, der vorzugsweise nur auf eine Temperatur im Ofeninnenraum unterhalb des Schmelzpunktes der Schwerzuschlagstoffe erhitzt wird.